# EUROPEAN PATENT APPLICATION

(11) **EP 4 391 115 A1**
(43) Date of publication of application: **26.06.2024**
(21) Application number: 22857208.7
(22) Date of filing: 29.01.2022
(51) Int. Cl.: H01M 4/62, H01M 50/431, H01M 50/443, H01M 10/42

(54) **LITHIUM-CONTAINING MATERIAL**

(30) Priority: 19.08.2021 CN 202110956905
(71) Applicant: Huzhou Nanmu-Nano Science and Technology Co., Ltd., Huzhou, Zhejiang 313098 (CN)
(72) Inventor: WU, Junjie, Huzhou, Zhejiang 313098 (CN); ZHANG, Xinhua, Huzhou, Zhejiang 313098 (CN); WENG, Qidong, Huzhou, Zhejiang 313098 (CN); ZHOU, Yong, Huzhou, Zhejiang 313098 (CN)
(74) Representative: Glück Kritzenberger Patentanwälte PartGmbB
(86) International application number: PCT/CN2022/074866
(87) International publication number: WO 2023/019886

(57) **Abstract**

The present invention relates to a lithium-containing material. The lithium-containing material is white powder. The lithium-containing material contains components of lithium (Li),aluminum(Al),phosphorus(P),fluorine(F)and oxygen(O)elements. The contents of the elements in mass ratio are as follows: the content of the lithium element is greater than 0% and less than or equal to 12%, the content of the aluminum element is 5%-40%,the content of the phosphorus element is 1%-35%,the content of the fluorine element is 0.4%-22%, and the content of the oxygen element is 2%-34%.The lithium-containing mate-rial is used as an electrode additive material or diaphragm coating material of a lithium-ion battery.

## Description

This application claims priority for Chinese patent application No. 202110956905.6, entitled "Lithium-Containing Material", filed with China National Intellectual Property Administration on August 19, 2021.

### BACKGROUND OF THE INVENTION

### 1. Technical Field

The present invention relates to the technical field of materials, in particular to a lithium-containing material.

### 2. Description of Related Art

With the wide application and rapid development of lithium batteries, the demand for the performance of lithium-ion batteries becomes increasingly higher. Specifically, lithium batteries are expected to have a high capacity, a good capacity retention rate during repeated charging and discharging, a good cycling property, a long service life and a high safety property.

To prolong the service life of a battery, the following two factors are usually considered: the structural stability of a positive electrode, a negative electrode, a diaphragm and an electrolyte material, the improvement of which allows the structure of the battery to stay the same during multiple cycles; and the external and service conditions of the battery.

However, the prolonging of the service life of the battery by improving the external and service conditions of the battery is limited. Only by improving the material performance that determines the "battery gene" inside the battery can the cycling property of the battery be fundamentally improved. In order to prolong the service life of lithium batteries, a novel lithium-containing material can be used to improve the cycling property of lithium batteries, thus prolonging the service life of batteries.

### BRIEF SUMMARY OF THE INVENTION

An embodiment of the present invention provides a lithium-containing material, which has a good electrolyte wettability and a good lithium ion conductivity, can inhibit lithium dendrites, and can improve the service life and cycling property of a lithium battery.

An embodiment of the present invention provides a lithium-containing material, which is white powder. The lithium-containing material comprises components of lithium (Li),aluminum (Al),phosphorus (P),fluorine (F),and oxygen (O); wherein by mass, more than 0% and less than or equal to 12% of lithium (Li), 5%-40% of aluminum (Al), 1%-35% of phosphorus (P), 0.4%-22% of fluorine (F) and 2%-34% of oxygen (O).

The lithium-containing material is used as an electrode additive material or a diaphragm coating material of a lithium ion battery.

Preferably, an X-ray diffraction (XRD) pattern of the lithium-containing material has characteristic diffraction peaks at positions where 2θ is 28°, 30° and 19°.

Preferably, a tap density of the lithium-containing material is 0.60-1.48 g/cm³.

Preferably, a solubility of the lithium-containing material is less than 1 g/100 g in water, ethanol and N-methylpyrrolidone (NMP).

Preferably, a total content of magnetic impurities in the lithium-containing material is less than 1.5 ppm, wherein the magnetic impurities comprise one or more of Cr, Fe, Ni, Zn and Co.

Further preferably, in the lithium-containing material, the content of Cr is ≤0.15 ppm, the content of Fe is ≤1.35 ppm, the content of Ni is ≤0.04 ppm, the content of Zn is ≤0. 01 ppm, and the content of Co is ≤0.01 ppm.

Preferably, the lithium-containing material is also doped with element M, the content of M in the lithium-containing material is 0%-30%, and M is selected from any one of H, K, Cl or Na.

Preferably, the general formula of the lithium-containing material is Li₁₊ₓ M₁₋ₓAl(PO₄)O_{1-y}F_{2y}, where 0≤x≤1 and 0<y<0.1.

The lithium-containing material provided by the embodiment of the present invention has a good electrolyte wettability and a good lithium ion conductivity, can inhibit lithium dendrites, and can improve the service life and cycling property of a lithium battery.

### BRIEF DESCRIPTION OF THE SEVERAL VIEWS OF THE DRAWINGS

The technical solution of the embodiments of the present invention will be described in further detail with reference to the drawings and embodiments.
Fig. 1 is an X-ray diffraction (XRD) pattern of a lithium-containing material according to an embodiment of the present invention; and
Fig. 2 is a principle diagram of a contact angle described in the embodiment of the present invention.

### DETAILED DESCRIPTION OF THE INVENTION

The invention will be further explained below with reference to drawings and specific embodiments, but it should be understood that these embodiments are only for more detailed explanation, and should not be construed as limiting the invention in any way, that is, not intended to limit the scope of protection of the present invention.

A lithium-containing material provided by an embodiment of the present invention is white powder. The lithium-containing material comprises components of lithium (Li),aluminum (Al),phosphorus (P),fluorine (F),and oxygen (O), wherein by mass, more than 0% and less than or equal to 12% of lithium (Li), 5%-40% of aluminum (A1), 1%-35% of phosphorus (P), 0.4%-22% of fluorine (F) and 2%-34% of oxygen (O).

In a preferred solution, the lithium-containing material is also doped with element M, the content of M in the lithium-containing material is 0%-30%, and M is selected from any one of H, K, Cl or Na.

Preferably, the general formula of the lithium-containing material is Li₁₊ₓ M₁₋ₓAl(PO₄)O_{1-y}F_{2y}, where 0≤x≤1 and 0<y<0.1.

An X-ray diffraction pattern of the lithium-containing material provided by the invention has obvious characteristic diffraction peaks at positions where 2θ is 28°, 30° and 19°.

A tap density of the lithium-containing material provided by the invention is 0.60-1.48 g/cm³.

A solubility of the lithium-containing material provided by the invention is less than 1 g/100 g in water, ethanol and N-methylpyrrolidone (NMP).

A total content of magnetic impurities in the lithium-containing material provided by the invention is less than 1.5 ppm, wherein the magnetic impurities comprise one or more of Cr, Fe, Ni, Zn and Co. Specifically, the content of Cr is ≤0.15 ppm, the content of Fe is ≤1.35 ppm, the content of Ni is ≤0.04 ppm, the content of Zn is ≤0. 01 ppm, and the content of Co is ≤0.01 ppm.

The lithium-containing material provided by the present invention can be used as an electrode additive material or a diaphragm coating material of a lithium ion battery, and the material has a good electrolyte wettability and a good lithium ion conductivity, can inhibit lithium dendrites, and can improve the service life and cycling property of a lithium battery.

### Embodiment 1

It can be seen from appearance that a lithium-containing material in this embodiment is white powder, and the general formula of the lithium-containing material satisfies Li₁₊ₓM₁₋ₓAl (PO₄) O_{1-y}F_{2y}. The chemical formula is Li₂Al (PO₄)O_{0.94}F_{0.12} when element M does not exist. Specifically, the lithium-containing material comprises, by mass, about 8.6% of lithium, 35% of aluminum, 28% of phosphorus, about 16% of fluorine, and about 12.4% of oxygen.

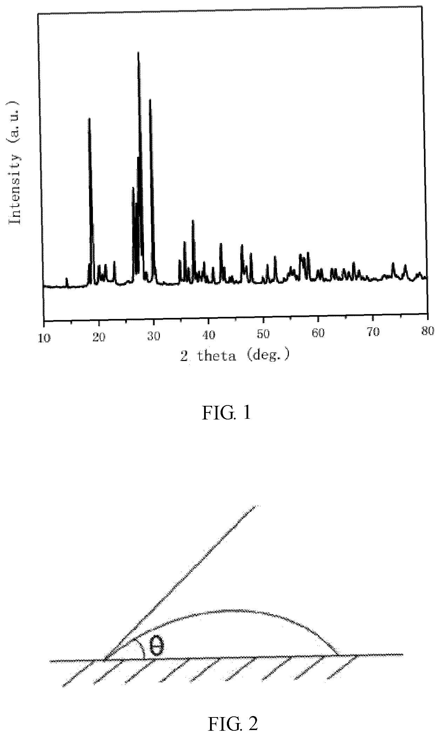

An XRD diffraction pattern of the material is shown in Fig. 1, where obvious characteristic diffraction peaks can be seen at positions where 2θ is 28°, 30° and 19°. Tests showed that a tap density of the material was 1.08 g/cm³.

ICP elemental analysis of the material showed that the content of lithium was 8.45%, the content of aluminum was 34.7%, the content of Cr was 0.1298 ppm, the content of Fe was 1.2052 ppm, the content of Ni was 0.0276 ppm, the content of Zr was 0 ppm, the content of Co was 0.0006 ppm, and the total content of magnetic substances was 1.3632 ppm.

A ternary positive electrode material NCM622, carbon black, polyvinylidene fluoride and the above lithium-containing material were evenly mixed according to the mass ratio of 8:1:0.5:0.5 and applied to an aluminum foil current collector to obtain a positive electrode of a battery, graphite served as a negative electrode, a single-layer polyethylene film served as a diaphragm, an ethyl acetate solution of 1MLiClO₄ served as an electrolyte, and a button battery was assembled in a glove box filled with argon gas.

### Embodiment 2

A ternary positive electrode material NCM622, carbon black and polyvinylidene fluoride were evenly mixed according to the mass ratio of 8:1:1 and applied to an aluminum foil current collector to obtain a positive electrode of a battery, graphite and the lithium-containing material in Embodiment 1 were evenly mixed according to the mass ratio of 9:1 and then applied to copper foil to obtain a negative electrode of the battery, a single-layer polyethylene film served as a diaphragm, an ethyl acetate solution of 1MLiClO₄ served as an electrolyte, and a button battery was assembled in a glove box filled with argon gas.

### Embodiment 3

A ternary positive electrode material NCM622, carbon black and polyvinylidene fluoride were evenly mixed according to the mass ratio of 8:1:1 and applied to an aluminum foil current collector to obtain a positive electrode of a battery, graphite served as a negative electrode, the lithium-containing material in Embodiment 1 was applied to a single-layer polyethylene film to serve as a diaphragm, an ethyl acetate solution of 1MLiClO₄ served as an electrolyte, and a button battery was assembled in a glove box filled with argon gas.

### Embodiment 4

It can be seen from appearance that a lithium-containing material in this embodiment is white powder, and the general formula of the lithium-containing material satisfies Li₁₊ₓM₁₋ₓAl(PO₄)O_{1-y}F_{2y}. The chemical formula is Li₂Al(PO₄)O_{0.95}F_{0.1} when element M does not exist. Specifically, the lithium-containing material comprises, by mass, about 10% of lithium, 38% of aluminum, 26% of phosphorus, about 20% of fluorine, and about 6% of oxygen.

Tests showed that a tap density of the material was 0.84 g/cm³.

ICP elemental analysis of the material showed that the content of lithium was 10.1%, the content of aluminum was 37.6%, the content of Cr was 0.0326 ppm, the content of Fe was 0.3957 ppm, the content of Ni was 0.0306 ppm, the content of Zr was 0.0053 ppm, the content of Co was 0.0002 ppm, and the total content of magnetic substances was 0.4644 ppm.

A ternary positive electrode material NCM622, carbon black, polyvinylidene fluoride and the above lithium-containing material were evenly mixed according to the mass ratio of 8:1:0.5:0.5 and applied to an aluminum foil current collector to obtain a positive electrode of a battery, graphite served as a negative electrode, a single-layer polyethylene film served as a diaphragm, an ethyl acetate solution of 1M LiClO₄ served as an electrolyte, and a button battery was assembled in a glove box filled with argon gas.

### Embodiment 5

A ternary positive electrode material NCM622, carbon black and polyvinylidene fluoride were evenly mixed according to the mass ratio of 8:1:1 and applied to an aluminum foil current collector to obtain a positive electrode of a battery, graphite and the lithium-containing material in Embodiment 4 were evenly mixed according to the mass ratio of 9:1 and then applied to copper foil to obtain a negative electrode of the battery, a single-layer polyethylene film served as a diaphragm, an ethyl acetate solution of 1M LiClO₄ served as an electrolyte, and a button battery was assembled in a glove box filled with argon gas.

### Embodiment 6

A ternary positive electrode material NCM622, carbon black and polyvinylidene fluoride were evenly mixed according to the mass ratio of 8:1:1 and applied to an aluminum foil current collector to obtain a positive electrode of a battery, graphite served as a negative electrode, the lithium-containing material in Embodiment 4 was applied to a single-layer polyethylene film to serve as a diaphragm, an ethyl acetate solution of 1M LiClO₄ served as an electrolyte, and a button battery was assembled in a glove box filled with argon gas.

### Embodiment 7

It can be seen from appearance that a lithium-containing material in this embodiment is white powder, and the general formula of the lithium-containing material satisfies Li₁₊ₓM₁₋ₓAl (PO₄) O_{1-y}F_{2y}, where M is preferably hydrogen (H), in which case the chemical formula is LiHAl(PO₄) O_{0.96}F_{0.08}. Specifically, the lithium-containing material comprises, by mass, about 4.7% of lithium, 35.6% of aluminum, 24.7% of phosphorus, about 18.5% of fluorine, about 5.3% of oxygen, and about 1.68% of hydrogen. An XRD diffraction pattern of the material is shown in Fig. 1, where obvious characteristic diffraction peaks can be seen at positions where 2θ is 28°, 30° and 19°.

Tests showed that a tap density of the material was 1.08 g/cm³.

ICP elemental analysis of the material showed that the content of lithium was 8.45%, the content of aluminum was 34.7%, the content of Cr was 0.1298 ppm, the content of Fe was 1.2052 ppm, the content of Ni was 0.0276 ppm, the content of Zr was 0 ppm, the content of Co was 0.0006 ppm, and the total content of magnetic substances was 1.3632 ppm.

A ternary positive electrode material NCM622, carbon black, polyvinylidene fluoride and the above lithium-containing material were evenly mixed according to the mass ratio of 8: 1:0.5:0.5 and applied to an aluminum foil current collector to obtain a positive electrode of a battery, graphite served as a negative electrode, a single-layer polyethylene film served as a diaphragm, an ethyl acetate solution of 1M LiClO₄ served as an electrolyte, and a button battery was assembled in a glove box filled with argon gas.

### Embodiment 8

A ternary positive electrode material NCM622, carbon black and polyvinylidene fluoride were evenly mixed according to the mass ratio of 8: 1: 1 and applied to an aluminum foil current collector to obtain a positive electrode of a battery, graphite and the lithium-containing material in Embodiment 7 were evenly mixed according to the mass ratio of 9:1 and then applied to copper foil to obtain a negative electrode of the battery, a single-layer polyethylene film served as a diaphragm, an ethyl acetate solution of 1M LiClO₄ served as an electrolyte, and a button battery was assembled in a glove box filled with argon gas.

### Embodiment 9

A ternary positive electrode material NCM622, carbon black and polyvinylidene fluoride were evenly mixed according to the mass ratio of 8: 1: 1 and applied to an aluminum foil current collector to obtain a positive electrode of a battery, graphite served as a negative electrode, the lithium-containing material in Embodiment 7 was applied to a single-layer polyethylene film to serve as a diaphragm, an ethyl acetate solution of 1M LiClO₄ served as an electrolyte, and a button battery was assembled in a glove box filled with argon gas.

### Comparative example

A ternary positive electrode material NCM622, carbon black and polyvinylidene fluoride were evenly mixed according to the mass ratio of 8: 1: 1 and applied to aluminum foil to obtain a positive electrode of a battery, graphite served as a negative electrode, a single-layer polyethylene film served as a diaphragm, an ethyl acetate solution of 1M LiClO₄ served as an electrolyte, and a button battery was assembled in a glove box filled with argon gas.

Battery performance testing: The button batteries prepared in Embodiments 1-9 and Comparative Example were tested for the specific discharge capacity at different rates (1C-10C) under the charge and discharge voltage window of 1 V-2.5 V, self-discharge performance K value after standing for 7 days and 15 days, and temperature rise at a center point of a surface of the battery during discharge at different rates. Further, the initial specific capacity and specific capacity after cyclic charging and discharging for 100 times were also tested, and the test results are shown in Table 1.

**Table 1**

| | Self-discharge K value (mV/d) | | Rate discharge capacity (mAh/g) | | | | Rate discharge temperature rise (K) | | | | Cycling property (mAh/g) | |
|---|---|---|---|---|---|---|---|---|---|---|---|---|
| | 7 days | 15 days | 1C | 2C | 5C | 10C | 1C | 2C | 5C | 10C | Initial | Cycle 100 times |
| Embodime nt 1 | 15.8 | 11.7 | 194.2 | 192.3 | 189.4 | 185.5 | 0.5 | 1.1 | 1.8 | 2.5 | 195 | 167.3 |
| Embodime nt 2 | 17.5 | 13.6 | 194.3 | 193.8 | 188.2 | 186.3 | 0.6 | 1.1 | 1.8 | 2.4 | 195.4 | 170.5 |
| Embodime nt 3 | 17.9 | 10.8 | 194.7 | 191.6 | 190.5 | 188.6 | 0.3 | 0.9 | 1.5 | 2 | 194.2 | 168.7 |
| Embodime nt 4 | 19.8 | 14.2 | 193.9 | 189.2 | 186.1 | 184.8 | 0.5 | 0.9 | 1.6 | 2.3 | 193.8 | 164.8 |
| Embodime nt 5 | 20.7 | 16.5 | 194 | 192.5 | 188.4 | 185.2 | 1 | 1.5 | 2.1 | 2.6 | 195 | 169.3 |
| Embodime nt 6 | 16.4 | 11.3 | 194.6 | 192.8 | 190.9 | 189.2 | 0.9 | 1.3 | 1.6 | 1.9 | 192.4 | 163.9 |
| Embodime nt 7 | 15.7 | 11.5 | 194.6 | 192.4 | 188.9 | 186.5 | 0.5 | 1.0 | 1.7 | 1.5 | 195.6 | 168.2 |
| Embodime nt 8 | 17.5 | 13.4 | 194.4 | 194.5 | 189.7 | 187.1 | 0.5 | 1.1 | 1.7 | 2.5 | 195.1 | 171.1 |
| Embodime nt 9 | 17.6 | 10.5 | 194.1 | 192.6 | 190.1 | 188.4 | 0.3 | 0.8 | 1.5 | 2.1 | 194.5 | 168.5 |
| Comparati ve example | 27.8 | 21.4 | 175.3 | 170.2 | 162.3 | 142.7 | 1.5 | 2.3 | 3.6 | 5 | 180.5 | 145.6 |

According to the values in Table 1, 5C/1C, 10C/1C and the capacity retention rate after 100 cycles were calculated and listed in Table 2 below.

**Table 2**

| | Performance index | | Capacity retention rate after 100 cycles |
|---|---|---|---|
| | 5C/1C (%) | 10C/1C (%) | |
| Embodiment 1 | 97.5 | 95.5 | 85.80% |
| Embodiment 2 | 96.9 | 96.9 | 87.30% |
| Embodiment 3 | 97.8 | 96.9 | 86.90% |
| Embodiment 4 | 96 | 95.3 | 85.00% |
| Embodiment 5 | 97.1 | 95.5 | 86.80% |
| Embodiment 6 | 98.1 | 97.2 | 85.20% |
| Embodiment 7 | 97.6 | 96.3 | 85.6% |
| Embodiment 8 | 97.1 | 96.8 | 87.2% |
| Embodiment 9 | 98.1 | 96.8 | 87.1% |
| Comparative example | 92.1 | 80.2 | 75.10% |

It can be seen from the data that the 5C/1C rate performance and 10C/1C rate performance of Embodiments 1-9 were higher than those of the Comparative example; the capacity retention rate after 100 cycles was also significantly higher than that of the Comparative example; and when discharging at different rates, the temperature rise increased with the increase of the discharge rate, and under the same rate, the temperature rise of the Comparative example was higher than that of Embodiments 1-9. Further, the self-discharge K value of the Embodiments was obviously smaller than that of the Comparative example under the same standing time.

From the data in Table 1, it can be seen that the specific capacity and initial cycling property of the button batteries prepared by adding lithium-containing materials in Embodiments 1-9 of this application were obviously better than those of the button battery in the Comparative example. The reason may be that the addition of lithium-containing materials increases the number of lithium ions during charging and discharging, so sufficient lithium ions are provided for forming SEI films, thus improving the initial cycling property and specific capacity.

During discharging of lithium ion batteries, lithium tablets will dissolve into lithium ions, and during charging, lithium ions are reduced to metallic lithium. In the reduction process, due to thermodynamic reasons, lithium is deposited unevenly, thus generating dendritic lithium. Existing research shows that lithium dendrites may become "dead lithium", resulting in irreversible loss of capacity, thus affecting the discharge efficiency; moreover, lithium dendrites may also cause serious security problems, such as diaphragm penetration, short-circuiting and battery explosion. According to the data in Table 1 and Table 2, it can be seen that the rate discharge capacity of the button batteries prepared by adding lithium-containing materials (whether to the positive electrode or negative electrode or diaphragm) was obviously higher than that of the button battery in the Comparative example; and the capacity retention rate after 100 cycles was high (85% or more). However, in the Comparative example, the battery prepared without adding lithium-containing materials had a low capacity retention rate (less than 75%) after the same number of cycles. According to the test data results, it is speculated that a uniform and stable solid-liquid phase interface is formed between the electrode material prepared by using the lithium-containing material provided by the invention as an additive and an electrolyte, which induces the uniform deposition of metallic lithium, and this interface may be related to the reduction of lithium in the lithium-containing material, thereby inhibiting the generation of lithium dendrites, reducing the generation of "dead lithium", and then reducing the loss of battery capacity; as a result, a high battery rate discharge capacity is realized. In addition, according to the data of temperature rise at the center point of the surface of the battery at different rates in Table 1, the temperature rise of the battery added with the lithium-containing material of the invention is lower than that of the Comparative example by more than half under the same rate. The decrease of the service temperature also greatly improves the safety of the battery and avoids harm caused by high temperature.

In addition, the wettability between the electrolyte and the positive electrode, negative electrode and diaphragm will affect the shuttling of lithium ions between the positive electrode and the negative electrode and the interface resistance of the battery, and then affect the discharge rate, discharge capacity and working voltage of the battery. Therefore, a good wettability of electrode materials is beneficial to the improvement of battery performance. The diaphragms prepared in Embodiment 6 and Comparative example were tested; the negative electrode prepared by mixing graphite with the lithium-containing material in Embodiment 5 and the negative electrode made of graphite in Comparative example were tested; and the positive electrode prepared by mixing the ternary positive electrode material NCM622, carbon black, polyvinylidene fluoride and the lithium-containing material in Embodiment 4 and the positive electrode prepared by adding no lithium-containing material in Comparative example were tested. Fig. 2 is a principle diagram of a contact angle. In this embodiment, the same electrolyte was dropped on the diaphragm, positive electrode and negative electrode prepared by adding lithium-containing materials, and the diaphragm, positive electrode and negative electrode without lithium-containing materials. The contact angles of the electrolyte with the diagram, positive electrode and negative electrode were measured by a contact angle measuring instrument to compare the influence of lithium-containing materials on the wettability of battery materials.

**Table 3**

| | Contact angle θ |
|---|---|
| Diaphragm in Embodiment 6 | 25° 6' |
| Diaphragm in Comparative example | 27° 2' |
| Negative electrode in Embodiment 5 | 24° 3' |
| Negative electrode in Comparative example | 27° 6' |
| Positive electrode in Embodiment 4 | 25° 5' |
| Positive electrode in Comparative example | 26° 4' |

By comparing the measured contact angles, it was found that the contact angle between an electrode plate or diaphragm prepared by adding lithium-containing materials and the electrolyte was smaller; and the smaller the contact angle, the better the wettability of the material. The test results show that the addition of lithium-containing materials improves the wettability of the material in the same electrolyte. Therefore, the lithium-containing material has a good wettability.

In order to detect the influence of the lithium-containing material on the resistivity of positive and negative electrode plates, the resistivity of a positive electrode plate in Embodiment 4 and a negative electrode plate in Embodiment 5, and the resistivity of a positive electrode plate and a negative electrode plate in Comparative example were tested with a resistivity tester, and the test results are shown in Table 4.

**Table 4**

| Group | Resistivity of electrode plate (mΩ) |
|---|---|
| Embodiment 4 | 15.6 |
| Positive electrode in Comparative example | 167.5 |
| Embodiment 5 | 16.8 |
| Negative electrode in Comparative example | 178.5 |

From the data in Table 4, it can be seen that the resistivity of the positive electrode and negative electrode prepared by adding lithium-containing materials is obviously lower than that of the positive electrode and negative electrode without lithium-containing materials in Comparative example. The reason may be that the lithium-containing material has a good lithium ion conductivity, which further reduces the resistivity of electrode plates.

To sum up, the lithium-containing material, as the additive material of a lithium battery, can improve the rate performance of the battery, improve the service life and cycling property of the lithium battery, greatly improve the safety property of the lithium battery, and allow the battery to keep a good energy density.

The above-mentioned specific embodiments further explain the purpose, technical scheme and beneficial effects of the invention in detail. It should be understood that the above are only specific embodiments of the invention and are not used to limit the scope of protection of the invention. Any modification, equivalent substitution, improvement, etc. made within the spirit and principles of the invention should be included in the scope of protection of the invention.

## Claims

1. A lithium-containing material which is white powder, comprising components of lithium (Li),aluminum (Al),phosphorus (P),fluorine (F),and oxygen (O), by mass, more than 0% and less than or equal to 12% of lithium (Li), 5%-40% of aluminum (A1), 1%-35% of phosphorus (P), 0.4%-22% of fluorine (F) and 2%-34% of oxygen (O), wherein
the lithium-containing material is used as an electrode additive material or a diaphragm coating material of a lithium ion battery.

2. The lithium-containing material according to claim 1, wherein an X-ray diffraction (XRD) pattern of the lithium-containing material has characteristic diffraction peaks at positions where 2θ is 28°, 30° and 19°.

3. The lithium-containing material according to claim 1, wherein a tap density of the lithium-containing material is 0.60-1.48 g/cm³.

4. The lithium-containing material according to claim 1, wherein a solubility of the lithium-containing material is less than 1 g/100 g in water, ethanol and N-methylpyrrolidone (NMP).

5. The lithium-containing material according to claim 1, wherein a total content of magnetic impurities in the lithium-containing material is less than 1.5 ppm, and the magnetic impurities comprise one or more of Cr, Fe, Ni, Zn and Co.

6. The lithium-containing material according to claim 5, wherein in the lithium-containing material, the content of Cr is ≤0.15 ppm, the content of Fe is ≤1.35 ppm, the content of Ni is ≤0.04 ppm, the content of Zn is ≤0.01 ppm, and the content of Co is ≤0.01 ppm.

7. The lithium-containing material according to claim 1, wherein the lithium-containing material is also doped with element M, the content of M in the lithium-containing material is 0%-30%, and M is selected from any one of H, K, Cl or Na.

8. The lithium-containing material according to claim 1 or 7, wherein the general formula of the lithium-containing material is Li₁₊ₓ M₁₋ₓAl(PO₄)O_{1-y}F_{2y}, 0≤x≤ 1, and 0<y<0.1.
